# EUROPEAN PATENT APPLICATION

(11) **EP 1 198 018 A2**
(43) Date of publication of application: **17.04.2002**
(21) Application number: 01124452.2
(22) Date of filing: 11.10.2001
(51) Int. Cl.: H01M 4/52, H01M 4/50, C01G 49/00, C01G 45/00

(54) **Lithium-iron-manganese complex oxide having a layered rock-salt structure and production method thereof**

(30) Priority: 11.10.2000 JP 2000310246
(71) Applicant: National Institute of Advanced Science and Technology, Osaka (JP); Toda Kogyo Corporation, Hiroshima-shi, Hiroshima-ken (JP)
(72) Inventor: Tabuchi, Mitsuharu, 1-8-31, Midorigaoka Ikeda Osaka 563-8577 (JP); Kageyama, Hiroyuki, 1-8-31, Midorigaoka Ikeda Osaka 563-8577 (JP); Nakamura, Tatsuya, 2167 Shosha, Himeji, Hyogo, 671-0021 (JP); Yoshida, Takayuki, Otake-shi, Hiroshima-ken, 739-0652 (JP); Kanno, Ryoji, Department of Electronic Chemistry, Midori-ku, Yokohama, Kanagawa, 226-8502 (JP)
(74) Representative: VOSSIUS & PARTNER

(57) **Abstract**

A lithium-iron-manganese complex oxide having a layered rock-salt structure comprising a solid solution formed by dissolving lithium ferrite (LiFeO₂) in Li₂₋ₓMnO_{3-y} (0≦x≦2, 0≦y≦1) of a layered rock-salt structure in a homogeneous crystalline state in such a way that an iron rate satisfies the relationship of 0.2≦Fe/(Fe+Mn)≦0.75, wherein at least 10% of iron contained in said solid solution is in a tetravalent state. The lithium-iron-manganese complex oxide is useful as cathode materials for a next generation low-priced lithium-ion battery and catalyst materials.

## Description

The present invention relates to a lithium-iron-manganese complex oxide having a layered rock-salt structure and a production method thereof, and more specifically, to the lithium-iron-manganese complex oxide having a layered rock-salt structure containing a tetravalent iron which is particularly useful as cathode materials for a next-generation low-priced lithium-ion battery, catalyst materials and the like, and a production method thereof.

Iron oxides, a base unit of which is mainly Fe₂O₃, have been used widely as magnetic materials and pigments. For example, in spinel ferrite (γ-Fe₂O₃ and MO•Fe₂O₃, M = Mn, Zn, Ni) being important as a magnetic core and magnetic tape material and hexagonal ferrite (MO•6Fe₂O₃, M = Sr, Ba) for permanent magnet materials, the characteristic of the iron oxides is derived from expression of ferrimagnetism through interaction between the large magnetic moment and the strong antiferromagnetism, which a trivalent iron has. Further, in hematite (α-Fe₂O₃), auburn which the trivalent iron has leads to an application to pigments.

Though the trivalent iron is most stable among the iron oxides, it becomes a divalent iron readily by a temperature of heat treatment or an atmosphere, and this causes breakdown of a high insulation and degradation of a coercive force of the iron oxide. However, in magnetites (Fe₃O₄, FeO•Fe₂O₃) which is a kind of spinel ferrite, high electron conductivity resulting from a mixed divalent-and-trivalent state of iron is shown, and the magnetites are applied to toner materials, magnetic carrier materials, catalyst materials and the like.

On the other hand, it is difficult to make iron tetravalent in the iron oxide, and the tetravalent iron is slightly observed only in perovskite oxides (SrFeO₃₋ₓ, CaFeO₃₋ₓ, and the like). These perovskite oxides containing the tetravalent iron have high electron conductivity and capability of gas oxidation resulting from a mixed trivalent-and-tetravalent state of iron and are researched to be used as electrode materials of solid oxide fuel cell and a gas-oxidizing catalyst by utilizing these features, and therefore the oxides containing the tetravalent iron are highly useful industrially.

However, as a producing technology of forming the tetravalent iron in compounds other than crystal phases of the perovskites, there is only a method in which part of iron is oxidized to the tetravalent iron by eliminating Na or Li electrochemically from α-NaFeO₂ (Literature 1: Y. Takeda, K.Nakahara, M.Nishijima, N.Imanishi, O.Yamamoto, M.Takano and R.Kanno, Mat. Res. Bull., 29, [6] 659, (1994)), iron-containing LiNiO₂ (Literature 2: C.Delmas, M.Menetrier, L.Crogurnnec, I.Saadoune, A.Rougier, C.Pouillerie, G.Prado, M.Gre, L.Fournes, Electrochimica Acta, 45, 243, (1999)) and iron-containing LiCoO₂ (Literature 3: H.Kobayashi, H.Shigemura, M.Tabuchi, H.Sakaebe, K.Ado, H.Kageyama, A.Hirano, R.Kanno, M.Wakita, S.Morimoto, S.Nasu, J. Electrochem. Soc., 147, [3], 960, (2000)), which are the layered rock-salt types as far as the inventors know. However, these methods require two steps of process of synthesizing Na and Li compounds from the raw materials and then eliminating Na and Li electrochemically and therefore it cannot be said as a preferable method from the viewpoint of mass production and simplification of the producing technology. Further, it is extremely difficult to draw out Li electrochemically from lithium ferrite (LiFeO₂) of a layered rock-salt type (Literature 4: K.Ado, M.Tabuchi, H.Kobayashi, H.Kageyama, O.Nakamura, Y.Inaba, R.Kanno, M.Takagi and Y.Takeda, J. Electrochem Soc., 144, [7], L177, (1997)) and no successful results have been reported. This indicates that, currently, it is extremely difficult to replace the LiCoO₂ with lithium ferrite from the viewpoint of toxicity and resource conservation of LiCoO₂-base materials which are used as cathode materials for the lithium-ion secondary battery.

The present inventors presented that a LiFeO₂-Li₂MnO₃ solid solution had been prepared by a hydrothermal reaction process and a solid-phase reaction process (iron nitrate, manganese nitrate and lithium hydroxide were used as starting materials), iron was dissolved in a homogeneous crystalline state up to 20% (Fe/(Fe+Mn) = 0.2) to manganese and a battery using Li₂MnO₃ containing Fe in the amount of 10% of overall metal ion had a flat-region associated with the 3+/4+ oxidation-reduction potential of iron in a 4V-region at the international meeting on lithium batteries in Italy (held on May 28, 2000), but a discharge capacity was small and a satisfactory substance was not obtained from the viewpoint of instability of the discharge potential toward number of cycles. Further, the amount of the tetravalent iron in this solid solution is as low as 8% or less. Since the solid solution does not contain Co and Ni which are considered problematic in points of toxicity and resource, it is expected as cathode materials for a next-generation lithium-ion battery. Accordingly, if the substance containing high concentration of the tetravalent iron exists and furthermore the simple and convenient technology of producing the compound is established, the compound may be expected to be applied to wide fields such as lithium-battery materials and catalyst materials from the viewpoint of abundance of iron resources and low toxicity of iron.

It is an object of the present invention to provide a lithium-iron-manganese complex oxide having a layered rock-salt structure containing a high purity of tetravalent iron which is expected as cathode materials for a low-priced lithium-ion battery or a gas-oxidizing catalyst.

It is another object of the present invention to provide a method of producing the above-mentioned lithium-iron-manganese complex oxide.

Further objects and advantages of the present invention will become apparent for those skilled in the art from the detailed description and explanation given below.

The present inventors had made an extensive series of studies to solve the above-mentioned problems, and thus found that a solid solution of lithium ferrite (LiFeO₂)-Li₂₋ₓMnO_{3-y} of a layered rock-salt type, which was obtained by using specified starting materials, contained iron of which at least 10% is oxidized to a tetravalent state and had a superior charge and discharge characteristics as cathode materials of a lithium-ion battery (capacity is resistant to a decline with the number of cycles and charge and discharge curve in the 4V region are stable) and came to complete the present invention.

That is, the present invention is, in a first aspect, to provide a lithium-iron-manganese complex oxide having a layered rock-salt structure comprising a solid solution formed by dissolving lithium ferrite (LiFeO₂) in Li₂₋ₓMnO_{3-y} (0≦x≦2, 0 ≦y≦1) of a layered rock-salt structure in a homogeneous crystalline state in such a way that an iron rate satisfies the relationship of 0.2≦Fe/(Fe+Mn)≦0.75, wherein at least 10% of iron contained in the solid solution is in a tetravalent state.

A preferred embodiment is the lithium-iron-manganese complex oxide having a layered rock-salt structure, wherein at least 20% of iron is in a tetravalent state.

The present invention is, in a second aspect, to provide a method of producing a lithium-iron-manganese complex oxide having a layered rock-salt structure, which comprises the steps of;
mixing an aqueous solution mixed with an iron salt and a manganese salt and an aqueous solution of oxalic acid, to precipitate an oxalate of iron-manganese,
pyrolyzing the precipitate after filtrating, washing and drying, and
mixing the pyrolysate and a lithium compound and calcining the mixture at a temperature of 300 to 800°C.

A preferred embodiment is the production method of producing a lithium-iron-manganese complex oxide having a layered rock-salt structure, wherein pyrolysis is performed at a temperature of 350 to 550°C .

A preferred embodiment the method of producing a lithium-iron-manganese complex oxide having a layered rock-salt structure, wherein a mixing ratio of the lithium compound and the pyrolysate is 1 to 3 in terms of the molar ratio of lithium to iron-manganese in the pyrolysate (Li/(Fe+Mn)).

The invention is described in detail in connection with the drawings in which
Figure 1 is a diagrammatic illustration showing a structural comparison between a lithium-iron-manganese complex oxide having a layered rock-salt structure according to the present invention (Figure 1(A)) and a lithium ferrite of a layered rock-salt type (Figure 1(B));
Figure 2 is a photograph of a transmission electron microscope (TEM) of the sample obtained in Example 1;
Figure 3 is X-ray diffraction patterns of the samples obtained in Example 1 and in Comparative Example 1;
Figure 4 is Moessbauer spectra of ⁵⁷Fe on the samples obtained in Example 1 and in Comparative Example 1. Reference characters D1 to D3 indicate respective doublet components used for fitting. Respective dots and a solid line show measured values and calculated values, respectively and a broken line indicates respective doublet components; and
Figure 5 shows characteristics of initial and eighth charge and discharge cycles of a coin-type lithium battery in which the respective samples obtained in Example 1 and in Comparative Example 1 are cathodes and lithium metals are anodes. Climbing curves and descending curves correspond to the charge curve and the discharge curve, respectively.

Hereinafter, the present invention will be described in detail.

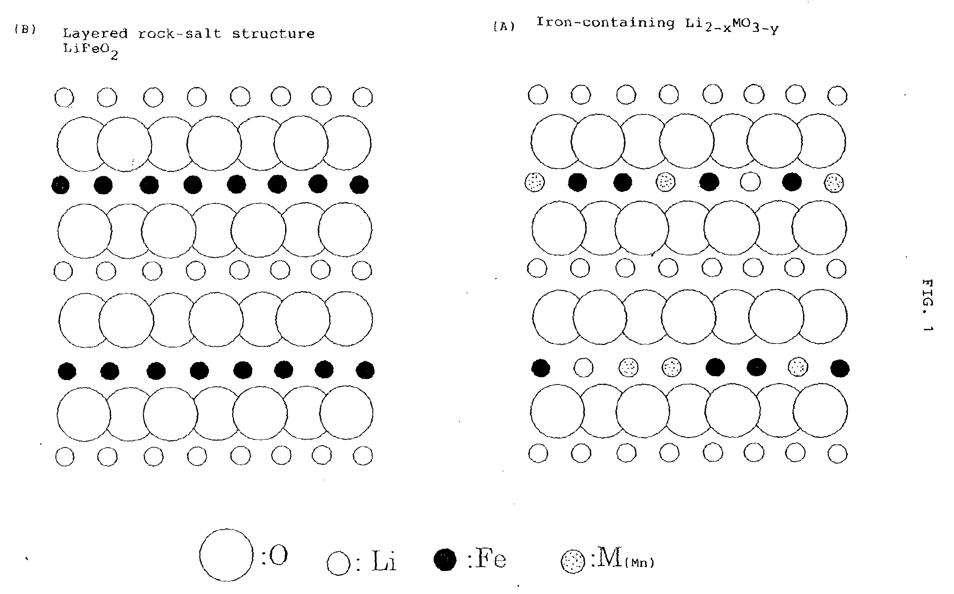

A lithium-iron-manganese complex oxide according to the present invention has a layered rock-salt structure similar to LiCoO₂ which is most frequently used at present as a cathode material of a lithium-ion battery as shown in Figure 1(A). Figure 1(B) indicates a layered rock-salt crystal structure of LiFeO₂ illustrated together for comparison. In the iron-containing Li₂₋ₓMnO_{3-y} of the present invention, it is
characterized in that iron ions occupy a transition-metal-containing layer (composed of Fe, Li, Mn ions) partially. This was thought out from the respects that LiFeO₂ of the layered rock-salt type hardly charge and discharge and iron (occupying partially in the Co layer) in the Fe-containing LiCoO₂ concerns the charge and the discharge (Literature 5: M.Tabuchi, K.Ado, H.Kobayashi, H.Sakaebe, H.Kageyama, C.Masquelier, M.Yonemura, A.Hirano and R.Kanno, J. Mater. Chem., 9, 199, (1999)). That is, the complex oxide of the present invention and the Fe-containing LiCoO₂ are almost the same when viewed from the sequence of iron ion and Li and Mn ions are used to dilute the iron ion in the iron-ion-containing layer.

The amount of iron ion to be dissolved in a homogeneous crystalline state for the necessary dilution is at least 20% and at most 75% of the amount of overall metal ion (0.2≦ Fe/(Fe+Mn)≦0.75). When the amount of iron to be dissolved exceeds 75%, the iron which does not concern the charge and the discharge and is not oxidized increases and it is not preferred for the battery characteristic. Further, when the amount of iron to be dissolved is less than 20%, it is not preferred since the charge and discharge capacity becomes small due to the less amount of iron ion though iron easily becomes tetravalent. The more the tetravalent iron contained in the solid solution, the more preferred, and the amount thereof is at least 10%, preferably at least 20% and more preferably at least 25% of the total amount of iron. The upper limit is not particularly specified.

As far as this layered rock-salt crystal structure is retained, the value of x in Li₂₋ₓMnO_{3-y} may assume a positive value. However, the value of x is desirably as close to 0 as possible from the viewpoint of the charge capacity. The value of x is usually in the range of 0≦x≦2, preferably 0≦x≦1, and more preferably 0≦x≦0.5. Also, the value of y is usually in the range of 0≦y≦1, preferably 0≦y≦0.5, and more preferably 0 ≦x≦0.2. Further, an impurity phase such as Li₂CO₃ may exist within the bounds of not having a significant effect on the charge and discharge characteristics.

The complex oxide of the present invention may be obtained by precipitating the oxalate of iron-manganese by mixing an aqueous solution mixed with an iron salt and a manganese salt and an aqueous solution of oxalic acid, pyrolyzing the precipitate after filtrating, washing and drying, and further mixing the pyrolysate and a lithium compound to calcine the mixture at a temperature of 300 to 800°C. The present inventors had studied extensively using various material oxides and therefore it was found that the above-mentioned method was most suitable as the method of producing an abundance of iron which was in the tetravalent state. Though the reason for this has not become apparent yet, a mixed iron-manganese state in a microscopic region or an effect of a subtle reducing atmosphere on the material oxides in the pyrolysis of oxalic acid can be thought.

As the iron salt and the manganese salt to be used in the present invention, the water-soluble compounds such as chlorides, nitrates, sulfates, acetates and hydroxides are suitable and these compounds are used as aqueous solutions. In addition to these, metal oxides of iron and manganese may also be dissolved with acid such as hydrochloric acid to form the aqueous solutions. These iron salts and the manganese salts are used solely or in a mixture of two kinds or more, respectively.

First, the aqueous solution mixed with the iron salt and the manganese salt is prepared. It is usually appropriate that the concentration of the aqueous solution is 10 to 30% by weight from the viewpoint of operability and economy. Further, the molar ratio of Fe/(Fe+Mn) is determined as appropriate corresponding to the value of Fe/(Fe+Mn) (0.2 to 0.75) in an objective complex oxide.

Next, the oxalate of iron-manganese is precipitated by mixing the aqueous solution mixed with the iron salt and the manganese salt and the aqueous solution of oxalic acid under stirring. It is usually appropriate that the concentration of the aqueous solution of oxalic acid is also 10 to 30% by weight from the viewpoint of operability and economy. It is usually appropriate that the aqueous solution of oxalic acid is 10 to 20 equivalent to the aqueous solution mixed with the iron salt and the manganese salt.

The resulting precipitate comprising the oxalate of iron-manganese is pyrolyzed after filtrating, washing and drying. It is usually appropriate that drying is performed at a temperature of 60 to 120°C for 10 to 30 hours. It is usually appropriate that the pyrolysis is performed at a temperature of 350 to 550°C for 1 to 10 hours in an oxidizing atmosphere like the air. The oxalate of iron-manganese is insufficiently pyrolyzed when the pyrolysis temperature is lower than 350°C and a sample of homogeneous composition is less attainable, and, on the other hand, when the pyrolysis temperature is higher than 550°C, reactivity decreases when the pyrolysate is mixed with the lithium compound and calcined, and therefore the objective compound becomes less attainable. Further, when the pyrolysis time is shorter than 1 hour, the pyrolysis is difficult to occur and, on the other hand, when the pyrolysis time is longer than 10 hours, productivity is low and it is not industrially favorable and economical.

Next, the resulting pyrolysate and the lithium compound are mixed and calcined at a temperature of 300 to 800°C. As the lithium compounds, lithium carbonate, lithium oxide, lithium hydroxide and lithium hydroxide monohydrate are given and these compounds are used solely or in a combination of two kinds or more.

A mixing ratio of the lithium compound and the pyrolysate is suitably in a range of 1.0 to 3.0 in terms of the molar ratio of lithium to iron-manganese in the pyrolysate (Li/(Fe+Mn)). When the lithium rate is less than the above-mentioned range, cubic α-LiFeO₂ or spinel phase LiFe₅O₈ other than an objective substance, which is electrochemically inactive and does not contain tetravalent Fe, coexists, and therefore the characteristic is lowered. On the other hand, when the lithium rate is more than the above-mentioned range, it is not economical since the lithium carbonate or the lithium hydroxide is used more than necessary.

Calcining is performed usually at a temperature of 300 to 800°C, and preferably at a temperature of 400 to 700°C in an oxidizing atmosphere like the air. When the calcination is performed below 300°C, a reaction between the lithium compound and the pyrolysate does not proceed sufficiently and the cubic α-LiFeO₂ or the spinel phase LiFe₅O₈ which is an impurity phase, coexists, and therefore the characteristic is lowered. On the other hand, when the calcination is performed over 800°C, the lithium volatilizes from the inside of the structure and the cubic α-LiFeO₂ or the spinel phase LiFe₅O₈ is produced, and therefore an oxidation-reduction reaction of Fe does not generate uniformly to the inside of a grain due to an increase of the grain size, which results in the deterioration of the characteristic. The caicination time is usually 5 to 200 hours and preferably 10 to 50 hours. When the calcination time is below 5 hours, the reaction between the lithium compound and the pyrolysate is difficult to occur and, on the other hand, when the calcination time is over 200 hours, productivity is low and it is not industrially favorable and economical.

As stated above, it is possible to obtain the lithium-iron-manganese complex oxide having a layered rock-salt structure which is an object of the present invention, and the complex oxide is useful as cathode materials for a next-generation low-priced lithium-ion battery and catalyst materials.

Hereinafter, the present invention will be described further in detail by way of Examples and Comparative Examples, but the invention is not intended to be limited thereto.

Meanwhile, a crystal phase of the samples obtained in Examples were evaluated by X-ray diffraction analysis, valence conditions of iron by Moessbauer spectrum of ⁵⁷Fe, and the composition of the samples by an analytical method using inductively coupled plasma (ICP) and an atomic absorption method. And, coin-type lithium batteries in which the sample was a cathode and lithium metal was an anode were prepared and the charge and discharge characteristics were investigated.

### Example 1

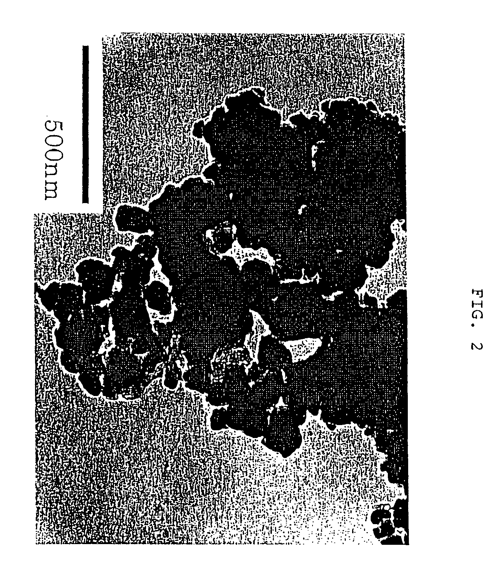

1 liter of an mixed iron sulfate-manganese sulfate aqueous solution in which iron sulfate and manganese sulfate were in the ratio of 3:7 (metal ion concentration of 0.5M) and 1 liter of an aqueous solution of oxalic acid, which was 1.0M in concentration, were mixed to obtain a precipitate of the metal oxalate, and the precipitate was filtrated, washed and dried (100°C) to obtain a dried powder. This powder was pyrolyzed at a temperature of 400°C for 10 hours in the air. Then, the powder of the pyrolysate and the powder of lithium hydroxide were mixed well in such a way that a molar ratio is 2.0 in terms of the molar ratio of lithium to iron-manganese in the pyrolysate (Li/(Fe+Mn)) using an mortar grinder. The mixed powder was put in an alumina crucible, calcined at a temperature of 700°C for 10 hours in the air, and cooled in an oven to obtain a product (Li₂₋ₓMnO_{3-y} containing Fe in the amount of 30% of overall metal ion) in powder form with a grain size of 100 to 500 nm (Figure 2).

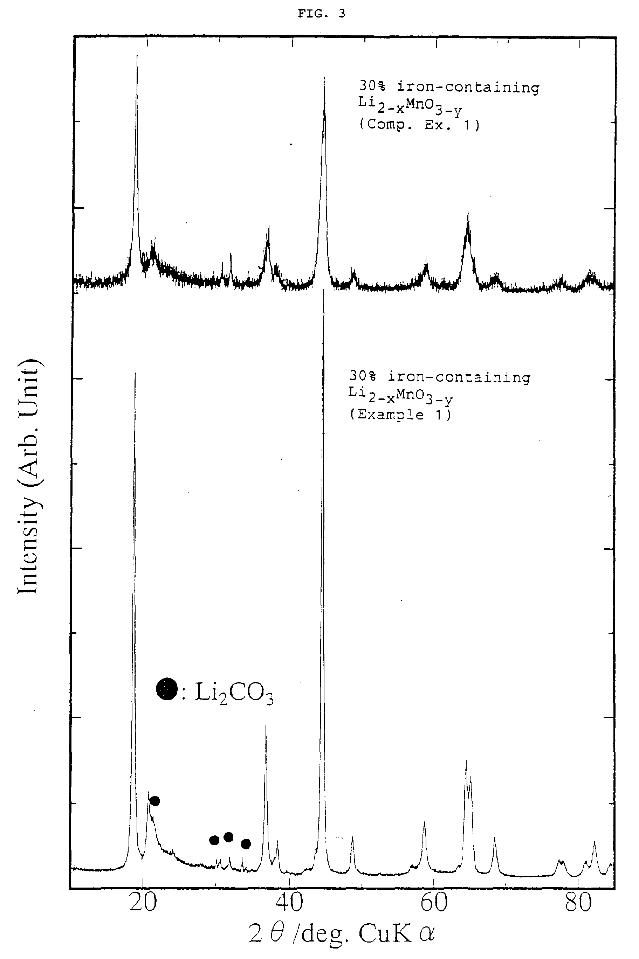

The X-ray diffraction pattern and the chemical analysis of this final product are shown in Figure 3 and Table 1, respectively. Though a small amount of the production of lithium carbonate was recognized from Figure 3, all peaks other than the peak of lithium carbonate could be indexed by the unit cell (space group: R3m, a = 2.851(1) Å, c = 14.259 Å) of Li₂₋ₓMnO_{3-y} (Li_{1.20}MnO_{2.20}) of a layered rock-salt type described in the literature (Literature 6: M. H. Rossouw, D.C. Lies and M.M. Thackeray, J. Solid State Chem., 104, 464, (1993)). From the results that a lattice constant (a = 2.86203(9) Å, c = 14.2273(7) Å) calculated from respective peaks of Li₂₋ₓMnO_{3-y} containing Fe in the amount of 30% of overall metal ion obtained in this example was similar to the value described in the above-mentioned literature and iron was contained in the amount of 30% in chemical analysis of Table 1 and the value of Li/(Fe+Mn) was substantially 2, it was confirmed that Li₂₋ₓMnO_{3-y} containing Fe in the amount of 30% of overall metal ion was obtained..

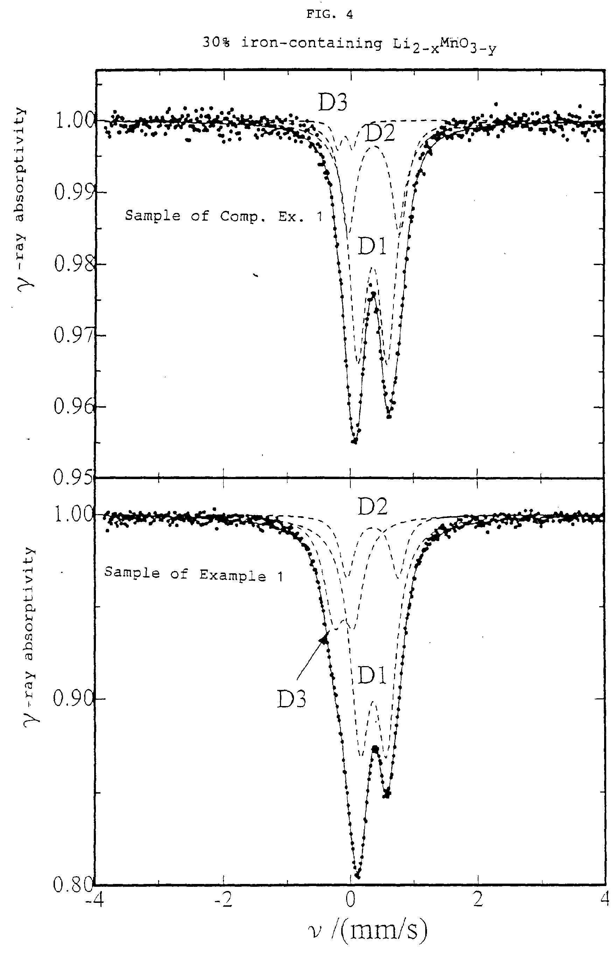

Next, Moessbauer spectrum of ⁵⁷Fe was measured on the sample of the Li₂₋ₓMnO_{3-y} containing Fe in the amount of 30% of overall metal ion at a room temperature to recognize the valence conditions of iron in the sample. Measurement result is shown in Figure 4. Since the obtained spectrum may be interpreted as a doublet being substantially split into two, the sample is found to be a paramagnetic material. Further, since this doublet was unsymmetrical, fitting was performed using three components (D1, D2, D3) of the doublet varying in isomer shift (IS) values. The parameters of respective components are shown in Table 2. The isomer shift values of both D1 and D2 components are on the order of +0.35 to +0.36 mm/s and close to the value (+0.37 mm/s) of the above-mentioned literature 5 (M.Tabuchi, K.Ado, H.Kobayashi, H.Sakaebe, H.Kageyama, C.Masquelier, M.Yonemura, A.Hirano and R.Kanno, J. Mater. Chem., 9, 199, (1999)) regarding α-NaFeO₂ being a typical high-spin trivalent iron oxide. From this result, it is understood that the iron in the sample retains partially a high-spin trivalent state. On the other hand, the isomer shift value of D3 component of the sample is -0.1 mm/s and close to the value of the tetravalent iron in Na_{0.5}FeO₂ which is obtained by eliminating 0.5Na from α-NaFeO₂. This meant that part of iron in the sample became tetravalent and it became apparent that 27% of iron was in a tetravalent state from the ratio of areas of the component D3.

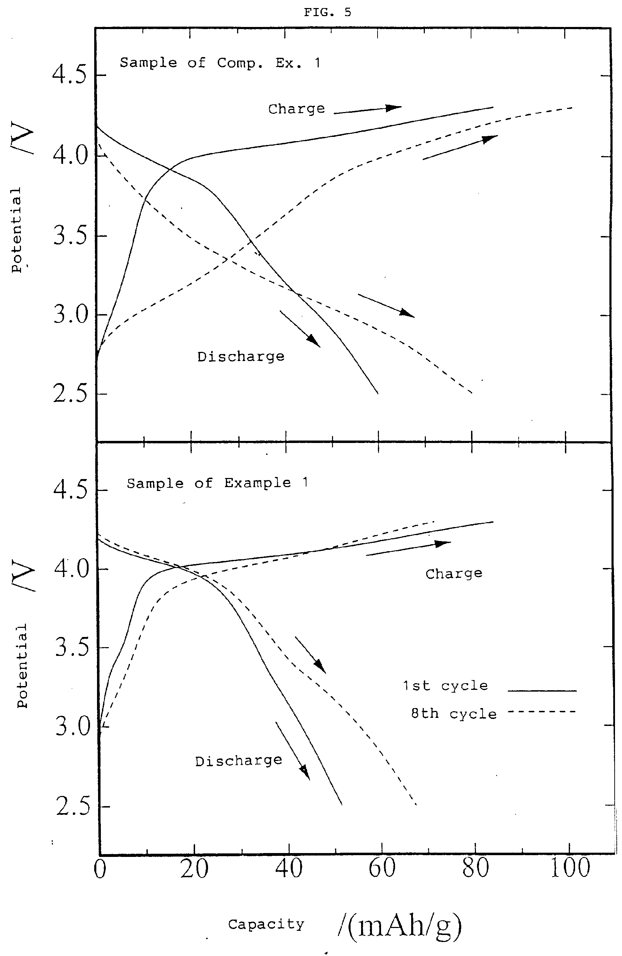

Further, the charge and discharge characteristics as a lithium battery were investigated (in a range of a current density of 7.5 mA/g and a potential of 2.5 to 4.3V) by using the sample obtained by this example as a cathode and the metal lithium as an anode and by using the 1M solution formed by dissolving lithium perchlorate in the mixed solvent of ethylene carbonate and dimethyl carbonate as electrolyte and the measurement results are shown in Figure 5. From this Figure 5, since the test can start from the instant when a charge is completed, the charge and discharge curves have a flat-potential portions in a 4V-region and an initial discharge potential exists in the 4V-region, it is understood that the sample obtained in this example may be used as the cathode material for the lithium-ion battery.

Compared with the sample of Comparative Example 1 described later, while the discharge potential of 4V is hardly found in the charge and discharge curves of eighth cycle test in the sample of Comparative Example 1, the sample obtained in Example 1 is found to maintain the discharge curve of the 4V-region well. This indicates that the sample of this example is more favorably applicable as the cathode of the lithium-ion battery.

### Comparative Example 1

12.12 g of Iron(III) nitrate nonahydrate and 20.09 g of manganese(II) nitrate hexahydrate (Fe:Mn = 3:7 in moles) were put into distilled water of 50 ml and dissolved completely, and as the aqueous solution was stirred, an aqueous solution of lithium hydroxide (this was obtained by dissolving 8.392 g of lithium hydroxide monohydrate into distilled water of 100 ml and was to be added to obtain a product in which the molar ratio of Li/(Fe+Mn) was 2.0) was gradually dripped. The resulting precipitate was dried at a temperature of 100ºC for several days , and after the dried precipitate was calcined at a temperature of 400ºC for 48 hours in the air, the calcined precipitate was milled and then calcined again at a temperature of 600ºC for 20 hours to obtain a product (Li₂₋ₓMnO_{3-y} containing Fe in the amount of 30% of overall metal ion) in powder form.

The X-ray diffraction pattern of this final product is shown in Figure 3. All peaks other than small peaks belonging to lithium carbonate (Li₂CO₃) could be indexed by the unit cell (space group: R3m, a = 2.851(1) Å, c = 14.259 Å) of Li₂₋ₓMnO_{3-y} (Li_{1.20}MnO_{2.20}) of a layered rock-salt type described in the above-mentioned literature 6 (M. H. Rossouw, D.C. Lies and M.M. Thackeray, J. Solid State Chem., 104, 464, (1993)). From the results that a lattice constant (a = 2.8742(3) Å, c = 14.247(3) Å) calculated from respective peaks of Li₂₋ₓMnO_{3-y} containing Fe in the amount of 30% of overall metal ion obtained in this comparative example is similar to the value described in the above-mentioned literature and iron is contained in the amount of 30% as charged in chemical analysis of Table 1 and the value of Li/(Fe+Mn) is substantially 2, it is understood that the Li₂₋ₓMnO_{3-y} containing Fe in the amount of 30% of overall metal ion, which has a chemical composition similar to Example 1, is obtained.

Next, procedures similar to Example 1 were conducted. Measurements of Moessbauer spectrum of ⁵⁷Fe and parameters of doublet components (D1 to D3) are shown in Figure 4 and Table 2, respectively. Iron became tetravalent partially also in this case as well as the sample of Example 1, and it became apparent that 4% of iron was in a tetravalent state from the ratio of areas of the component D3.

Further, results of investigating the charge and discharge characteristics as a lithium battery in the same way as in Example 1 using the sample as a cathode shown in Figure 5. It is understood that, in the charge and discharge curves of eighth cycle test, the discharge potential of 4V is hardly found in the sample of Comparative Example 1 and the sample of Comparative Example 1 is inferior to that of Example 1 as the cathode of the lithium-ion battery.

**Table 1**

| Chemical analysis of the sample of Fe-containing Li₂₋ₓMnO_{3-y} | | | | | |
|---|---|---|---|---|---|
| Fe contents (charged) | Li/wt% | Fe/wt% | Mn/wt% | Li/(Mn+Fe)* | Fe/(Fe+Mn)* |
| 30% (Comp.Ex. 1) | 11.0(1) | 13.2(1) | 30.2(1) | 2.04(1) | 0.30(1) |
| 25% (Example 1) | 11.5(1) | 12.7(1) | 29.9(1) | 2.15(1) | 0.29(1) |

| | | | | | |
|---|---|---|---|---|---|
| * Molar ratio | | | | | |

**Table 2**

| Comparison between Moessbauer spectral parameters of Li₂₋ₓMnO_{3-y} containing Fe in the amount of 30% of overall metal ion and reported results of literatures | | | | |
|---|---|---|---|---|
| Sample name | Components | Isomer shift value/(mm/s) | Quadrupole split value/(mm/s) | Ratio of areas/% |
| Li₂₋ₓMnO_{3-y} containing Fe in the amount of 30% of overall metal ion (Comp.Ex. 1) | D1 | +0.352(2) | 0.469(13) | 66 |
| | D2 | +0.363(3) | 0.81(2) | 30 |
| | D3 | -0.095(9) | 0.238(19) | 4 |
| Li₂₋ₓMnO_{3-y} containing Fe in the amount of 30% of overall metal ion (Example 1) | D1 | +0.361(2) | 0.414(8) | 60 |
| | D2 | +0.355(4) | 0.808(8) | 13 |
| | D3 | -0.102(4) | 0.319(7) | 27 |
| α-NaFeO₂ (Literature 5) | Fe³⁻ | +0.366 | 0.468 | 100 |
| α-Na_{0.5}FeO₂ (Literature 1) | Fe³⁺ | +0.314 | 0.870 | 59 |
| | Fe⁴⁺ | -0.07 | 0.714 | 41 |

As described above, in accordance with the present invention, it is possible to provide the lithium-iron-manganese complex oxide having a layered rock-salt structure which highly contains a tetravalent iron and is suitable for the cathode materials of the low-priced, large-capacity lithium-ion battery.

## Claims

1. A lithium-iron-manganese complex oxide having a layered rock-salt structure comprising a solid solution formed by dissolving lithium ferrite (LiFeO₂) in Li₂₋ₓMnO_{3-y} (0≦x≦2, 0 ≦y≦1) of a layered rock-salt structure in a homogeneous crystalline state in such a way that an iron rate satisfies the relationship of 0.2≦Fe/(Fe+Mn)≦0.75, wherein at least 10% of iron contained in said solid solution is in a tetravalent state.

2. The lithium-iron-manganese complex oxide having a layered rock-salt structure as set forth in claim 1, wherein at least 20% of iron is in a tetravalent state.

3. A method of producing a lithium-iron-manganese complex oxide having a layered rock-salt structure, which comprises the steps of;
mixing an aqueous solution mixed with an iron salt and a manganese salt and an aqueous solution of oxalic acid, to precipitate an oxalate of iron-manganese,
pyrolyzing the precipitate after filtrating, washing and drying, and
mixing the pyrolysate and a lithium compound and calcining the mixture at a temperature of 300 to 800°C.

4. The method of producing a lithium-iron-manganese complex oxide having a layered rock-salt structure as set forth in claim 3, wherein pyrolysis is performed at a temperature of 350 to 550ºC.

5. The method of producing a lithium-iron-manganese complex oxide having a layered rock-salt structure as set forth in claim 3 or 4, wherein a mixing ratio of the lithium compound and the pyrolysate is 1 to 3 in terms of a molar ratio of lithium to iron-manganese in the pyrolysate (Li/(Fe+Mn)).
